# EUROPÄISCHE PATENTSCHRIFT

(11) **EP 0 782 821 B1**
(45) Veröffentlichungstag und Bekanntmachung des Hinweises auf die Patenterteilung: **21.10.1998**
(21) Anmeldenummer: 97100048.4
(22) Anmeldetag: 03.01.1997
(51) Int. Cl.: A01K 1/10

(54) **Futterschiebevorrichtung zum Zuschieben von Viehfutter, insbesondere von Futterblöcken, zu einem Fressgitter**
Device for displacing fodder, in particular blocks of fodder, in the direction of a feeding fence
Dispositif pour déplacer du fourrage, en particulier du fourrage en blocs, dans la direction d'un cornadis

(30) Priorität: 08.01.1996 DE 29600192 U
(43) Veröffentlichungstag der Anmeldung: 09.07.1997
(73) Patentinhaber: Hofacker, Hubert, 78199 Bräunlingen (DE)
(72) Erfinder: Hofacker, Hubert, 78199 Bräunlingen (DE)
(74) Vertreter: Neymeyer, Franz, Dipl.-Ing. (FH)

(56) Entgegenhaltungen:
- EP-A- 0 043 098
- EP-A- 0 608 032
- WO-A-95/08264
- NL-A- 9 300 092
- US-A- 4 295 559

## Beschreibung

Die Erfindung betrifft eine Futterschiebevorrichtung zum Zuschieben von Futterblöcken, zu wenigstens einem an der Längsseite eines Futtergangs eines Stalles angeordneten Freßgitter nach dem Oberbegriff des Patentanspruches 1 oder des Patentanspruches 2.

Moderne Stallbauten haben in ihrer Längsmitte einen so breiten Futtergang, daß er von Fahrzeugen befahrbar ist. Manche sind mit Tierboxen ausgestattet, die mit ihren Freßgittern an den Futtergang angrenzen.

Aus EP 0 608 032 A2 sind Vorrichtungen der gattungsgemäßen Art in unterschiedlichen Ausführungen bekannt. Bei einer Ausführungsform wird eine Winkelschiene, die sich in Längsrichtung des Futtergangs parallel zu einem Freßgitter erstreckt, von zwei doppelt wirkenden kurzen Hydraulikzylindern schrittweise angetrieben. Die Hydraulikzylinder sind in einem größeren Längsabstand voneinander im Bereich des Freßgitters in einem Hohlraum unterhalb des Futtergangbodens untergebracht und als Kurzhubzylinder ausgebildet. Ihre Kolbenstangen sind jeweils gelenkig mit einem doppelarmigen Schwenkhebel verbunden, die gemeinsam eine Schieberstange tragen. Mit dieser Schieberstange können die Futterblöcke wieder aus der Reichweite der Tiere vom Freßgitter weg geschoben werden.
Die Zylinderkörper der beiden Hydraulikzylinder sind jeweils mit einer sich in gleicher Richtung erstreckenden Zahnstange verbunden, die durch eine wechselweise Beaufschlagung der Hydraulikzylinder oszillierende Bewegungen ausführt. Mittels einer rastend in die Zahnstange eingreifenden Mitnehmerklinke, die an der Schieberschiene gelagert ist, können diese Bewegungen auf die Schieberschiene übertragen werden. Dabei ist die Mitnehmerklinke mittels einer besonderen Umschaltvorrichtung so umschaltbar, daß sie in ihrer ersten Schaltlage Schrittbewegungen der Schieberschiene in der einen Richtung und daß sie in ihrer zweiten Schaltlage Schrittbewegungen der Schieberschiene in der entgegengesetzten Richtung bewirkt.

Abgesehen davon, daß bei dieser Vorrichtung die Futterblöcke von der Schieberschiene jeweils nur schrittweise und nur in einer Richtung bewegt werden können, bedarf es einer besonderen manuellen Umschaltung der Mitnehmerklinke, um eine Bewegungsumkehr der Schieberschiene zu erreichen. Außerdem sind solche Antriebsvorrichtungen aufwendig und teuer, hinzu kommt, daß sie sich nur mit größeren Umbaumaßnahmen nachträglich in Stallungen einbauen lassen.

In dem genannten Dokument ist auch eine weitere Fördereinrichtung beschrieben, die einen horizontalen Förderrahmen aufweist, der von Exzenterwellen angetrieben, kreisende Förderbewegungen ausführt.

Bei einer anderen Antriebsvorrichtung ist an der längs verlaufenden Schieberschiene selbst ein in Parallellage zu dieser angeordneter Hydraulikzylinder längs beweglich gelagert. Sowohl am geschlossenen Ende des Zylinders als auch am freien Ende der Kolbenstange sind jeweils zwei Zugseile kreuzweise befestigt, die über Umlenkrollen der Schieberschiene geführt und mit ihren jeweils anderen Enden an ortsfesten Haltern befestigt sind. Bei dieser Anordnung läßt sich die Schieberschiene zwar wahlweise in der einen oder anderen Richtung stufenlos verschieben. Eine Gewähr dafür, daß die Schieberschiene auch bei ungleichen Widerstandskräften ihre Parallellage zur Längsmitte des Futtergangs bzw. zum Freßgitter beibehält, ist nicht gegeben. Diese Vorrichtung ist deshalb nicht brauchbar.

Bei einer weiteren bekannten Vorrichtung zum maschinellen Verschieben von Futter-Silageblöcken (EP-A 0 043 098), sind im Futtergang, der zwischen zwei Reihen von Tierboxen verläuft, mehrere mittels eines elektromotorischen Antriebs horizontal verfahrbare Schlitten mit jeweils einer Schubwand quer zur Längsachse des Futterganges nebeneinander angeordnet. Die auf jeweils auf einem Schlitten liegenden Silageblöcke werden auf die Stirnseiten der Tierboxen zugeschoben, wo die Tiere die Silageblöcke anfressen können. Damit den Tieren das Futter nicht ausgeht, werden die Schlitten nachgeschoben.

Die einzelnen Schlitten werden mittels darunter liegender, im Boden des Futtergangs versenkter Seil- oder Kettenzüge angetrieben, die jeweils paarweise mit einem Zentralantrieb kuppelbar sind. Dieser Zentralantrieb besteht im wesentlichen aus einer von einem Elektromotor angetriebenen, in Axialrichtung verschiebbaren und parallel zur Längsachse des Futterganges verlaufenden Antriebswelle. Diese Antriebswelle ist mit mehreren Kupplungselementen versehen, die mit entsprechenden Kupplungselementen der Seil- und Kettenzüge in Eingriff bringbar sind. Durch Drehen der Antriebswelle werden die einzelnen Schlitten über die Seil- und Kettenzüge bewegt. Sie können in beide Richtungen - d.h. auf die Tierboxen zu und von den Tierboxen weg - durch Links- und Rechtsdrehen der Antriebswelle bewegt werden. In einer Ruhestellung der Antriebswelle sind die Kupplungselemente ausgekuppelt.

Zwar wird mit dieser bekannten Vorrichtung den Tieren das Futter maschinell zugeteilt, jedoch ist dabei die Gefahr gegeben, daß Schmutz, Futterreste und ähnliches die Funktionfähigkeit der empfindlichen Seil- und Kettenzüge sowie der Kupplungselemente beeinträchtigen. Außerdem lassen sich solche Vorrichtungen nur unter großem Aufwand an Arbeit und Kosten nachträglich in Ställe einbauen.

Eine andere bekannte Vorrichtung (DE-PS 20 19 671) dient zum Transport von Futter zwischen einer Aufgabestation und einer Entnahmestation in einem Stall, der in seiner Längsmitte einen Futtergang aufweist, an den rechts und links die Tierboxen mit ihren Freßgittern angeordnet sind.

Entlang des Futterganges ist eine Schlittenplatte mittels einer Antriebsvorrichtung, z.B. eines Seil- oder Kettenzuges bewegbar und an jeder beliebigen Stelle im Stall positionierbar.

Die Aufgabestation befindet sich außerhalb des Stalls. Zum Transport des Futters wird die Schlittenplatte mittels der Antriebsvorrichtung zur Aufgabestation, neben der z. B. Silos und eine Futterbergehalle stehen, bewegt, wo sie mit Futter beladen wird. Die mit Futter beladene Schlittenplatte wird nun mittels der Antriebsvorrichtung in den Futtergang gefahren, wo das Futter von Hand den einzelnen Tieren zugeteilt wird.

Nur weil einerseits die Antriebsvorrichtung, d.h. der Seil- oder Kettenzug, im Stallboden versenkt und mit einer Abdeckhaube versehen ist und andererseits die Schlittenplatte dünn ausgeführt ist und in einer im Boden des Futtergangs vertieften Führungsebene läuft, ist der Futtergang unabhängig von der Position der Schlittenplatte mit Fahrzeugen befahrbar. Bei dieser bekannten Vorrichtung ist es aber erforderlich, den Tieren das Futter von Hand vorzulegen.

Ausgehend von den aus dem Dokument EP 0 608 032 A2 bekannten gattungsgemäßen Vorrichtungen liegt der Erfindung die Aufgabe zugrunde, eine Verbesserung solcher Vorrichtungen mit möglichst geringem Kostenaufwand dahingehend zu erzielen, daß sie auch nachträglich leicht in einen Stall eingebaut werden können, daß sie einfach handhabbar, gegen Schmutz, Futterreste usw. unempfindlich sind, daß der Futtergang trotzdem mit Fahrzeugen befahrbar bleibt und daß die Parallellage der Schieberschiene zur Längsmitte des Futtergangs bzw. zu den Freßgittern auch bei ungleichen Widerstandskräften während des Verschiebevorgangs erhalten bleibt.

Gelöst wird diese Aufgabe erfindungsgemäß durch die jeweils im kennzeichnenden Teil der Patentansprüche 1 und 2 genannten Merkmale.

Da sich diese Futterschiebevorrichtung mit nur einer Schieberschiene und mit nur einem oder auch zwei gegen Verschmutzung relativ unempfindlichen, hydraulischen Arbeitszylindern auch nachträglich in nahezu jeden von Freßgittern begrenzten Futtergang auch über dem Boden einbauen läßt, ist sie praktisch unbegrenzt einsetzbar, und ihre Montage ist auch ohne große Umbauarbeiten im Stall selbst möglich. Die erfindungsgemäße Vorrichtung ist auch einfach installierbar und handhabbar und minimal störanfällig.

Vorteilhafte Ausgestaltungen der Erfindung sind jeweils Gegenstand der Unteransprüche 3 bis 14, wobei insbesondere die in den Ansprüchen 7 bis 9 beschriebenen Ausgestaltungen einen zeitgesteuerten vollautomatischen Betrieb ermöglichen.

Anhand der Zeichnung wird die Erfindung im folgenden mit mehreren Ausführungsbeispielen näher erläutert. Es zeigen:
- Fig. 1: in schematischer Darstellung den Grundriß eines Stalls mit Futtergang und eingebauter Futterschiebevorrichtung
- Fig. 2: einen Schnitt II-II aus Fig. 1;
- Fig. 3: eine Einzelheit III aus Fig. 2 in vergrößerter Darstellung;
- Fig. 4: eine Ansicht IV aus Fig. 2;
- Fig. 5: in vergrößerter Darstellung eine Einzelheit im Schnitt;
- Fig. 6: die Einzelheit VI aus Fig. 2;
- Fig. 7: die Ansicht VII aus Fig. 6;
- Fig. 8: einen Teilschnitt gemäß der Schnittlinie II-II aus Fig. 1, jedoch mit versenkter Anordnung der Kolbenstange im Boden des Futterganges;
- Fig. 9: die Einzelheit IX aus Fig. 8;
- Fig. 10: einen Schnitt X-X aus Fig. 8;
- Fig. 11: einen Schnitt XI - XI aus Fig. 8 in vergrößerter Darstellung;
- Fig. 12: in schematischer Draufsicht eine andere Ausführungsform der Futterschiebevorrichtung ohne Abdeckplatte in einem Futtergang;
- Fig. 13: einen vergrößerten Ausschnitt aus Fig. 12;
- Fig. 14: einen Schnitt XIV-XIV aus Fig. 13;
- Fig. 15: einen Schnitt XV-XV aus Fig. 13;
- Fig. 16: in vereinfachter Draufsicht eine Variante der Futterschiebevorrichtung aus Fig. 12 ohne Abdeckplatte;
- Fig. 17: in vereinfachter Draufsicht eine weitere Variante der Futterschiebevorrichtung aus Fig. 12 ebenfalls ohne Abdeckplatte, und
- Fig. 18: eine hydraulische Steuereinrichtung als Blockschaltbild.

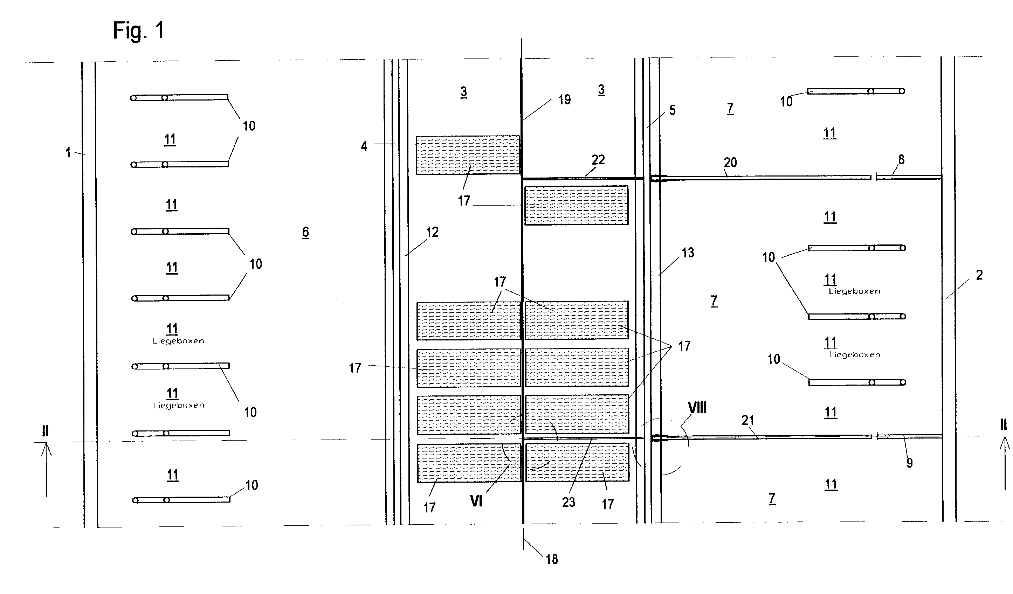

Fig. 1 zeigt den Teilgrundriß eines Stalles für Großvieh, der an seinen beiden Längsseiten durch Stallwände 1 und 2 begrenzt ist.

In der Mitte zwischen den beiden Stallwänden 1 und 2 befindet sich ein Futtergang 3, der längsseitig von zwei Freßgittern 4 und 5 begrenzt ist, die zugleich zwei Lauffelder 6 und 7 des Stalles vom Futtergang 3 abtrennen. Das Lauffeld 7 ist durch Trenngitter 8 und 9, die sich zwischen der Stallwand 2 und dem Freßgitter 5 quer dazu verlaufend erstrecken, zudem in weitere Lauffelder unterteilt. In den Lauffeldern 6 und 7, sowie auch zwischen den Trenngittern 8 und 9 befinden sich jeweils entfernt von den Freßgittern 4 und 5 Boxengitter 10, welche Liegeboxen 11 begrenzen.

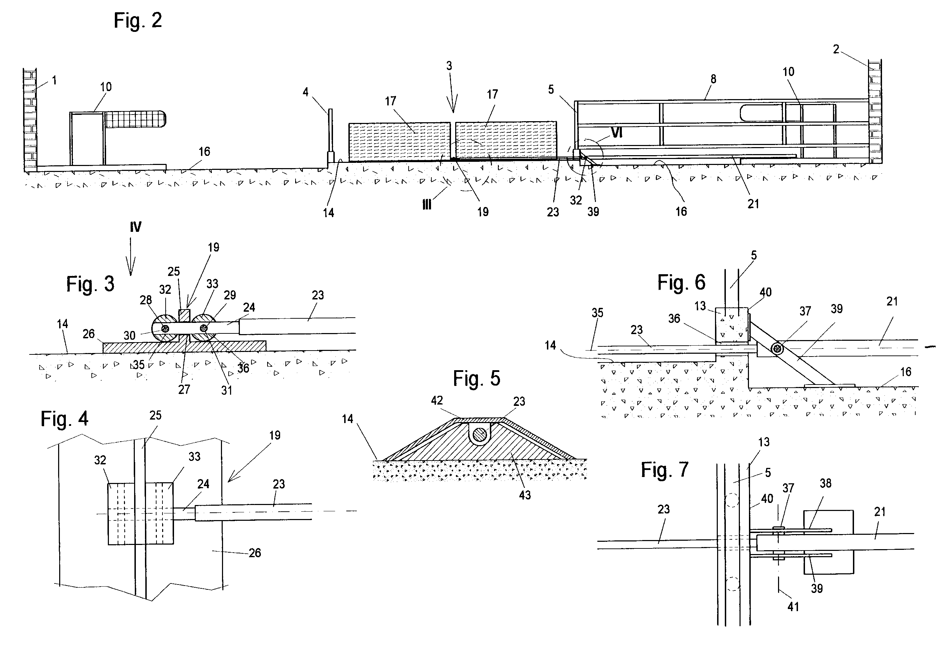

Die Freßgitter 4 und 5 sind in den einzelnen Zeichnungsfiguren jeweils nur schematisch dargestellt. Im einzelnen bestehen sie, ähnlich wie die Trenngitter 8, die in Fig. 2 in Seitenansicht sichtbar sind, aus rahmenartigen Rohrkonstruktionen. Die Freßgitter 4 und 5 sind jeweils auf niedrigen Mauersockeln 12 und 13 montiert, welche die Bodenfläche 14 des Futtergangs 3 überragen. Aus Fig. 2 und 5 ist ersichtlich, daß sich die Böden 15 und 16 der Lauffelder 6 und 7 jeweils in einer tiefer liegenden Ebene befinden als die Bodenfläche 14 des Futterganges.

Um quaderförmige Futterblöcke 17, die mittels eines Fahrzeuges, beispielsweise mittels eines Traktors, im Futtergang 3 auf dessen Boden 14 abgesetzt worden sind, beidseits der Längsmitte 18 des Futtergangs jeweils gemeinsam nach und nach den Freßgittern 4 und 5 schieben zu können, ist eine sich über die gesamte Länge des Futtergangs 3 erstreckende Schieberschiene 19 vorgesehen, die verschiebbar auf der Bodenfläche 14 aufliegt. Um mit Hilfe dieser Schieberschiene 19 die relativ schweren Futterblöcke 17 in beiden Querrichtungen, d.h. abwechselnd auf das Freßgitter 4 und das Freßgitter 5 zuschieben zu können und dabei auch die erforderliche Kraft zur Verfügung zu haben, sind zwei hydraulische Arbeitszylinder 20 und 21 vorgesehen, deren Achsen rechtwinklig zur Längsmittelachse 18 verlaufen und deren Kolbenstangen 22 und 23 jeweils mit der Schieberschiene 19 verbunden sind.

Wie aus Fig. 3 ersichtlich ist, weist die Schieberschiene 13 ein T-förmiges Querschnittsprofil auf, dessen vertikaler Steg 25 nach oben ragt und dessen flacher Teil 26 auf dem Boden 14 des Futterganges 10 verschiebbar aufliegt. Die beiden Kolbenstangen 22 und 23 sind jeweils mit verjüngten Endabschnitten 24 versehen, die jeweils eine Querbohrung 27 des vertikalen Steges 25 der Schieberschiene 19 durchragen und mit Querbolzen 28 und 29 versehen sind. Diese Querbolzen 28 und 29 durchragen nicht nur Querbohrungen 30 und 31 der verjüngten Endabschnitte 24 der beiden Kolbenstangen 22 und 23, sondern auch zentrale Axialbohrungen zweier zylindrischer Kupplungsteile 32 und 33, die ihrerseits mittels Querbohrungen 35 bzw. 36 auf den verjüngten Endabschnitt 24 aufgesteckt und beidseitig des vertikalen Steges 25 der Schieberschiene 19 angeordnet sind. Es ist aus Fig. 1 ersichtlich, daß die beiden Arbeitszylinder 20 und 21 mit ihren Kolbenstangen 22 und 23 an Stellen der Schieberschiene 19 befestigt sind, die in Längsrichtung der Schieberschiene 19 entfernt voneinander liegen, so daß etwa eine gleichmäßige Kraftübertragung über die Gesamtlänge der Schieberschiene 19 erfolgen kann. Es besteht selbstverständlich auch die Möglichkeit, bei längeren Futtergängen und entsprechend längeren Schieberschienen auch drei oder mehr solche Arbeitszylinder 20, 21 mit Kolbenstangen 22, 23 vorzusehen und diese in entsprechenden Abständen anzuordnen.

Aus Fig. 1 ist erkennbar, daß die Arbeitszylinder 20 und 21 mit ihren Kolbenstangen 22 und 23 jeweils rechtwinklig zum Freßgitter 5 und somit auch rechtwinklig zur Längsmittelachse 18 des Futterganges 3 angeordnet sind.

Bei dem in den Fig. 1 bis 6 dargestellten Ausführungsbeispiel, bei dem eine nachträgliche Montage der Arbeitszylinder 20 und 21 vorgesehen ist, liegen die Arbeitszylinder 20 und 21 mit ihren Kolbenstangen 22 und 23 in einer Horizontalebene 35 über dem Boden 14 des Futterganges 10. Es ist dazu lediglich erforderlich, den Mauersockel 13 zur freibeweglichen Aufnahme der Kolbenstangen 22 bzw. 23 an den entsprechenden Stellen jeweils mit einem horizontalen Durchbruch 36 zu versehen. Die Arbeitszylinder 20 und 21 sind, wie am besten aus den Fig. 2 und 5 ersichtlich ist, in diesem Falle mittels Schwenklagern 37 jeweils in zwei schrägen Stützstreben 38 und 39 gelagert, die einerseits auf dem tiefer liegenden Laufboden 16 und andererseits an der diesem zugekehrten vertikalen Wandfläche 40 des Mauersockels 13 befestigt sind.

Es ist aus den Fig. 6 und 7 erkennbar, daß die Schwenkachse 41 des Schwenklagers 37 horizontal und parallel zum Freßgitter 5 bzw. zur Schieberschiene 19 verläuft.

Durch diese schwenkbare Lagerung, ist es den Arbeitszylindern 20 und 21 möglich, Schwenkbewegungen auszuführen, die durch Unebenheiten der Bodenfläche 14 des Futterganges 10 hervorgerufen werden können, wenn die Schieberschiene 19 darüber gleitet.

Um den Futtergang in Längsrichtung trotz des Vorhandenseins der über der Bodenfläche 14 liegenden Kolbenstangen 22 und 23 befahren zu können, ist es zweckmäßig, die Kolbenstangen jeweils durch entsprechende Abdeckungen 42 oder über Fahrrampen 43 zu schützen.

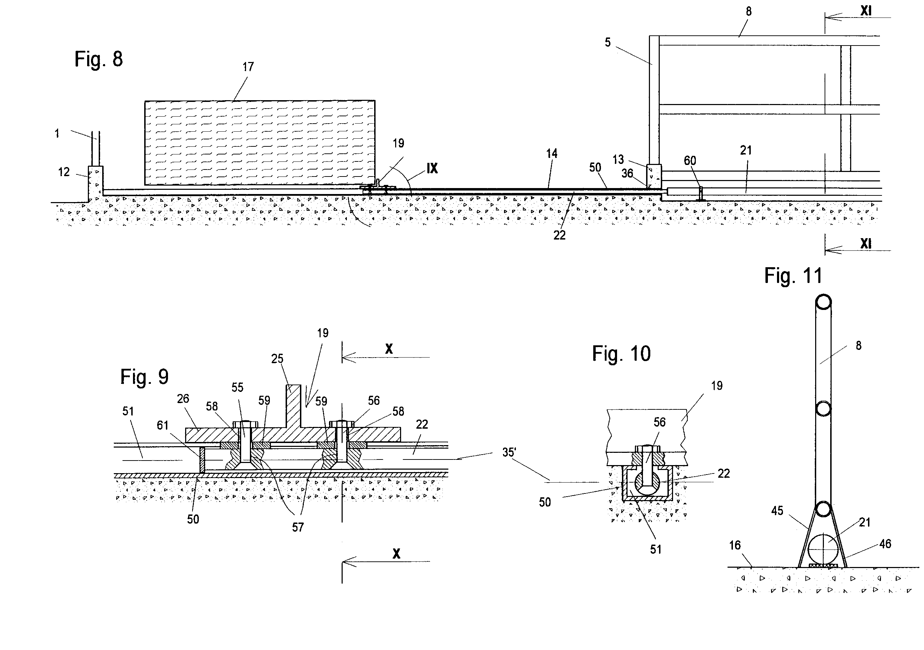

In den Fig. 8 bis 11 ist eine Ausführungsform der erfindungsgemäßen Futterschiebevorrichtung gezeigt, die sich von der in den Fig. 1 bis 7 dargestellten Ausführungsform hauptsächlich darin unterscheidet, daß in den Boden 14 des Futterganges 10 versenkt zwei im Querschnitt C-förmige Rechteckrohre 50 angeordnet sind, in dessen kanalartigen Hohlraum 51 jeweils eine Kolbenstange 22 bzw. 23 geschützt untergebracht ist. Die Kolbenstangen 22 und 23 liegen mit ihrem Arbeitszylinder 20 und 21 in diesem Falle tiefer, d.h. unterhalb der Oberfläche des Bodens 14 in einer Horizontalebene 35'. Die Enden der Kolbenstangen sind, wie aus den Fig. 9 und 10 ersichtlich ist, durch Gewindebolzen 55 und 56, die sowohl vertikale Querbohrungen 57 der Kolbenstange 22 und 23 als auch vertikale Bohrungen 58 des Flachteils 26 der Schieberschiene 19 durchragen, mit der Schieberschiene 19 verbunden. Durch Distanzscheiben 59, die jeweils zwischen dem Flachteil 26 der Schieberschiene 19 und den Endabschnitten der beiden Kolbenstangen 22 bzw. 23 angeordnet sind, ist der erforderliche Vertikalabstand zwischen den Kolbenstangen 22 bzw. 23 und der Schieberschiene 19 hergestellt.

Statt der schrägen Stützstreben 38 und 39 sind bei diesem Ausführungsbeispiel Lagerstützen 60 vorgesehen, in denen die Arbeitszylinder 20 bzw. 21 ebenfalls um horizontale, parallel zur Längsmittelachse 18 verlaufende Schwenkachsen in analoger Weise schwenkbar gelagert sind.

Um den Kanal 51 für die darin axial beweglich geführten Kolbenstangen 22 und 23 von Schmutz frei zu halten, sind die stirnseitigen Enden dieser Kolbenstangen 22 und 23 jeweils mit einem dem Hohlprofil des Vierkantrohres 50 angepaßten Schmutzräumer 61 versehen.

Sowohl beim Ausführungsbeispiel der Fig. 1 bis 7 als auch beim Ausführungsbeispiel der Fig. 8 ist 10 ist es zweckmäßig, die Arbeitszylinder 20 und 21 jeweils unterhalb von Trenngittern 8 anzuordnen und durch seitliche Abdeckbleche 46 zu schützen. Auch bei diesem letztgenannten Ausführungsbeispiel ist es selbstverständlich erforderlich, im Mauersockel 13 zur Durchführung der Kolbenstangen 22 und 23 jeweils horizontale Durchbrüche 36 vorzusehen.

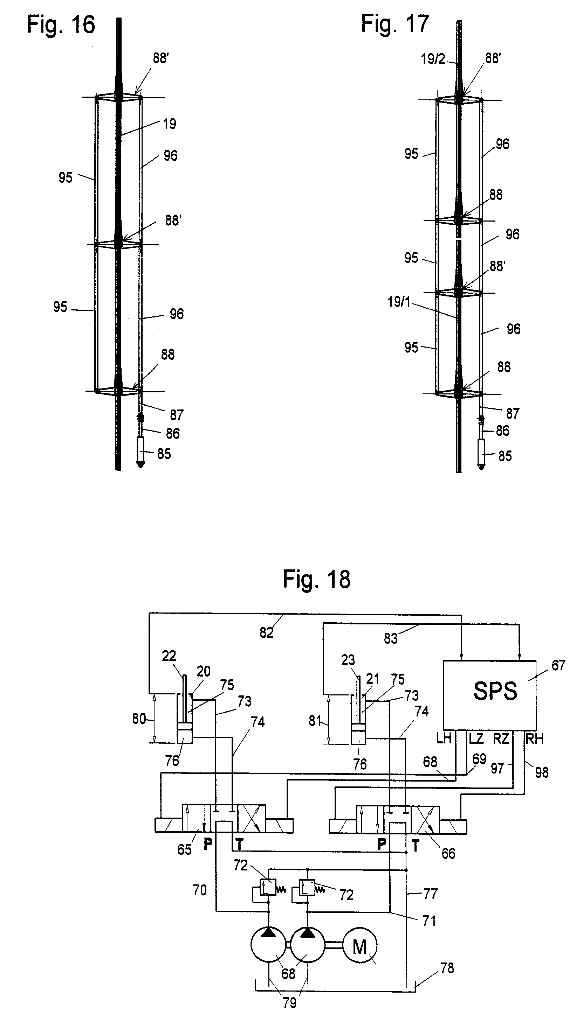

Zur Steuerung der Arbeitszylinder 20 und 21 bzw. der Arbeitsbewegungen der Schieberschiene 19 sind zwei 4/3-Wegeventile 65 und 66 vorgesehen (Fig. 18), die von einer elektronischen Steuereinheit 67, welche einen Mikroprozessor und ein Zeitglied enthält, elektrisch gesteuert werden. Hydraulisch beaufschlagt werden die Arbeitszylinder 20 und 21 jeweils von einer hydraulischen Tandempumpe 68, die von einem Elektromotor 69 angetrieben wird und deren Druckleitungen 70 und 71 jeweils zu einem Eingang P der 4/3-Wegeventile 65 bzw. 66 führen. Außerdem sind diese Druckleitungen 70 und 71 jeweils mit Überdruckventilen 72 versehen. Durch die abwechselnd als Druckleitungen und Rückflußleitungen fungierenden Hydraulikleitungen 73 und 74 sind die beiden Druckkammern 75 und 76 der beiden Arbeitszylinder 20 und 21 jeweils mit den 4/3-Wegeventilen 65 und 66 verbunden.

Um auch bezüglich des Synchronlaufes der beiden Arbeitszylinder 20 und 21 eine exakte Steuerung bzw. Druckbeaufschlagung in der einen oder anderen Richtung zu erhalten, sind beide Arbeitszylinder 20 und 21 mit elektrischen Weggebern 80 bzw. 81 versehen, die durch elektrische Signalleitungen 82 bzw. 83 mit der elektronischen Steuereinheit 67 verbunden sind. Diese Steuereinheit 67 steht ihrerseits jeweils durch elektrische Steuerleitungen 67 und 68 bzw. 97 und 98 mit den beiden 4/3-Wegeventilen 65 und 66 in Verbindung. Die beiden Anschlüsse P der beiden 4/3-Wegeventile 65 und 66 sind jeweils an eine gemeinsame Rücklaufleitung 77 angeschlossen, die in einen Druckmittelbehälter 78 mündet, in den auch die beiden Ansaugleitungen 79 der hydraulischen Tandempumpe 78 geführt sind.

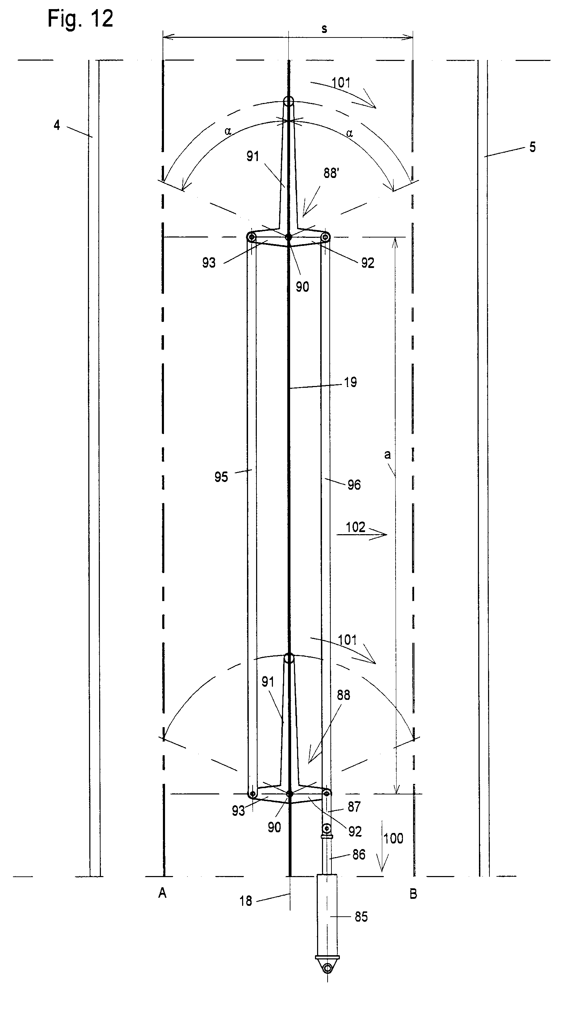

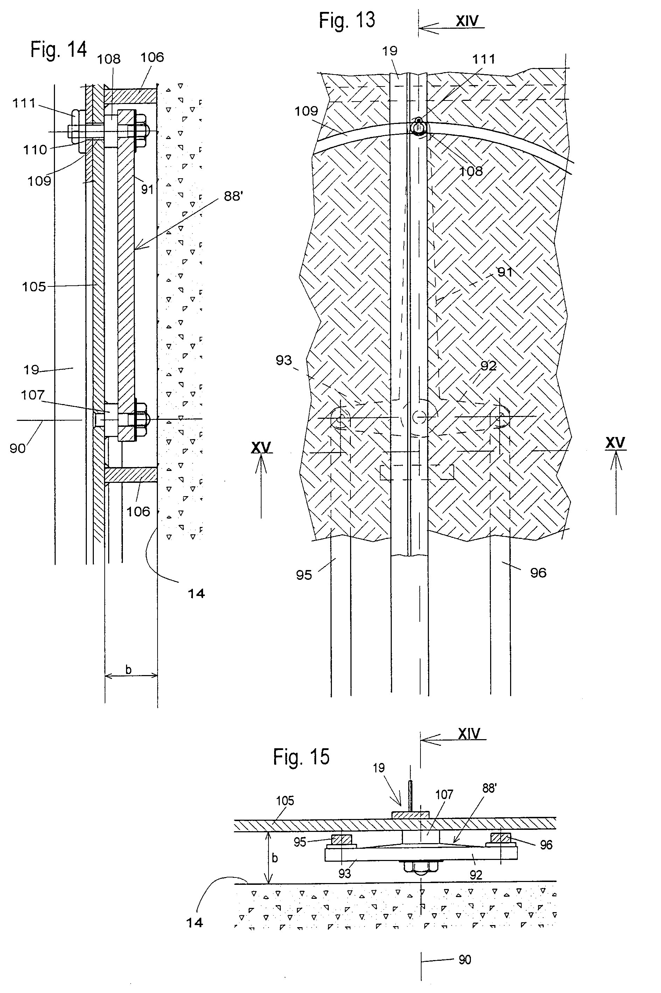

In den Fig. 12 bis 17 sind weitere Ausführungsbeispiele schematisch dargestellt, die sich von den vorstehend beschriebenen Ausführungsbeispielen prinzipiell dadurch unterscheiden, daß für das Verschieben einer Schieberschiene 19 oder zweier Schieberschienen 19/1 und 19/2 im Futtergang 10 eines Stalles keine quer zu den Freßgittern 4 und 5 verlaufenden hydraulischen Arbeitszylinder 20, 21 vorgesehen sind, sondern lediglich ein einziger Arbeitszylinder 85, der am einen Ende des Futtergangs 3 in Längsrichtung verlaufend angeordnet ist und dessen Kolbenstange 86 entweder direkt oder über ein Zwischenglied 87 mit einem Parallellenker 88 verbunden ist. Dieser Parallellenker 88 ist in der Mitte des Futtergangs unmittelbar über diesem Boden 14 um eine vertikale Schwenkachse 90 schwenkbar gelagert. Er besitzt einen langen Hebelarm 91 der sich in seiner mittleren Ruhelage in Längsrichtung des Futtergangs bzw. der Schieberschiene 19 erstreckt. Außerdem besitzt dieser Parallellenker 88 zwei kürzere rechtwinklig zum Hebelarm 91 verlaufende, sich im bezug auf die Schwenkachse 90 diametral gegenüberliegende Hebelarme 92 und 93. In einem Längsabstand a vom Parallellenker 88 entfernt ist ebenfalls in der Längsmitte des Futtergangs 3 ein zweiter Parallellenker 88' ebenfalls um eine vertikale Schwenkachse 90 schwenkbar gelagert, der genau die gleiche Form aufweist wie der Parallellenker 88, also ebenfalls einen längeren Hebelarm 91 und zwei kürzere Hebelarme 92 und 93 besitzt. Die kürzeren Hebelarme 92 und 93 dieser beiden Parallellenker 88 und 88' sind jeweils durch parallele Zugstangen 95 und 96 gelenkig miteinander verbunden, während die längeren Hebelarme 91 jeweils gelenkig mit der in einer darüber liegenden Ebene angeordneten Schieberschiene 19 in Verbindung stehen. Dabei liegt die Schieberschiene 19 zweckmäßig auf einer Abdeckung, z.B. in Form einer Abdeckplatte 105 auf (Fig. 14). Mit dem kurzen Hebelarm 92 des Parallellenkers 88 steht auch das Zwischenglied 87 gelenkig in Verbindung, so daß eine Druckbeaufschlagung des Arbeitszylinders 85 in Richtung des Pfeiles 100 eine Auslenkung der beiden längeren Hebelarme 91 in Richtung der Pfeile 101 und somit eine Verschiebung der Schieberschiene 19 in Richtung des Pfeiles 102 auf das Freßgitter 5 zu erfolgt. Bei entgegengesetzter Beaufschlagung des Arbeitszylinders 85 findet eine entsprechende Parallelverschiebung der Schieberschiene 19 in entgegengesetzter Richtung statt.

Bei einem maximalen Schwenkwinkel δ in der einen oder anderen Schwenkrichtung erfolgt jeweils eine Verschiebung der Schieberschiene 19 und die Hälfte der maximalen Bewegungsstrecke S in die Endposition A oder B.

In den Fig. 13 bis 15 ist in vergrößerter Darstellung eine zweckmäßige Ausgestaltung dieser Ausführungsform der Fig. 11 wiedergegeben.

Während es grundsätzlich auch möglich wäre, die Schwenklager für die beiden Parallellenker 88 und 88' jeweils im Boden 14 des Futtergangs 10 zu verankern, ist bei der in den Fig. 13 bis 15 dargestellten Ausführungsform eine befahrbare Andeckplatte 105 vorgesehen, auf deren Oberseite die Schieberschiene 19 lose, d.h. quer verschiebbar aufliegt. Durch entsprechende Stützrippen 106, die auf der Bodenfläche 14 des Futtergangs 3 aufsitzen, wird die Abdeckplatte 105 in einem Vertikalabstand b von der Oberfläche des Bodens 14 gehalten, der ausreicht, unterhalb der Abdeckplatte 5 die beiden Parallellenker 88 und 88' mit den Zugstangen 95 und 96 unterzubringen. Wie aus den Fig. 14 und 15 ersichtlich ist, sind die beiden Parallellenker 88 und 88' jeweils auf Lagerbolzen 107 gelagert, die unterseitig an der Abdeckplatte 5 festsitzend in vertikaler Lage angebracht sind. Die Enden der jeweils langen Hebelarme 91 sind durch entsprechende Kupplungszapfen 108 gelenkig mit der Schieberschiene 19 verbunden. Diese Kupplungszapfen durchragen jeweils einen bogenförmigen Schlitz 109 der Abdeckplatte 105 nach oben, und sie sind jeweils in einer Bohrung 110 des Flachteils 26 der Schieberschiene 19 befestigt sowie durch einen Splint 111 gesichert.

Wie die Fig. 15 und 16 zeigen, können auf diese Weise mit ein und demselben Arbeitszylinder 85 auch drei oder mehr Parallellenker 88 bzw. 88' und statt einer einzigen Schieberschiene 19 auch zwei Schieberschienen 19/1 und 19/2 beispielsweise durch zwei Paare von Parallellenkern 88 und 88' betätigt werden.

Diese Ausführungsform der Fig. 12 bis 17 hat den Vorteil, daß einerseits nur ein einziger Arbeitszylinder 85 benötigt wird und daß dieser Arbeitszylinder 85 auch keine so große Hublänge aufzuweisen braucht, wie die Arbeitszylinder 20 und 21 der anhand der Fig. 1 bis 10 beschriebenen Ausführungsbeispiele.

Bei dem zuletzt beschriebenen Ausführungsbeispiel der Fig. 12 bis 17 wird durch die unterschiedliche Länge der Hebelarme 91 und 92 eine entsprechende Übersetzung erreicht, die es ermöglicht, einen wesentlich kleineren und somit auch preiswerteren Arbeitszylinder 85 zu verwenden.

Für die Steuerung des Arbeitszylinders 85 kann die gleiche Schaltungsanordnung verwendet werden, wie sie auch für die Steuerung der beiden Arbeitszylinder 20 und 21 vorgesehen ist. Selbstverständlich sind dann nicht zwei 4/3-Wegeventile 65 und 66, sondern nur eines davon erforderlich.

Mit Hilfe dieser Steuervorrichtung, läßt sich die erfindungsgemäße Futterschiebevorrichtung vollautomatisch betreiben, wenn ein programmierbarer Prozessrechner in der elektronischen Steuereinheit 67 enthalten ist. Es kann dann ein periodisches Nachschieben der Futterblöcke 17 auf die beiden Freßgitter 4 und 5 zu programmiert werden, wobei der Weggeber 81 in diesem Falle nur die jeweilige Lage der Schieberschiene 19 bzw. der Schieberschienen 19/1 und 19/2 signalisiert, aus welcher der nächste Schiebevorgang eingeleitet wird.

## Patentansprüche

1. Futterschiebevorrichtung zum Zuschieben von Viehfutter, insbesondere von Futterblöcken (17), zu wenigstens einem an der Längsseite eines Futtergangs (3) eines Stalles angeordneten Freßgitter (4, 5) für mehrere Tiere, mittels wenigstens einer sich in Längsrichtung des Futtergangs (3) erstreckenden Schieberschiene (19), zu deren Querverschiebung zwei doppelt wirkende, mit ihren Achsen jeweils quer zur Längsrichtung des Futtergangs (3) verlaufend angeordnete, hydraulische Arbeitszylinder (20, 21) vorgesehen sind, die an zwei in Längsrichtung voneinander entfernten Stellen auf die Schieberschiene (19) einwirken,
**dadurch gekennzeichnet,**
daß die Arbeitszylinder (20,21) außerhalb des Futtergangs (3) jeweils im Bereich von Trenngittern (8, 9) benachbarter Lauffelder (7) angeordnet sind, wobei ihre Kolbenstangen (22, 23) direkt mit der Schieberschiene (19) verbunden sind und die Schieberschiene (19) jeweils aus ihrer in der Mitte des Futtergangs (3) liegenden Ausgangsposition durch entsprechende Umschaltung einer Steuereinheit (67) wechselweise auf jeweils eines von zwei an den beiden Längsseiten des Futtergangs (3) angeordneten Freßgittern (4, 5) zubewegbar ist.

2. Futterschiebevorrichtung zum Zuschieben von Viehfutter, insbesondere von Futterblöcken (17), zu wenigstens einem an der Längsseite eines Futtergangs (3) eines Stalles angeordneten Freßgitter (4, 5) für mehrere Tiere, mittels wenigstens einer sich in Längsrichtung des Futtergangs (3) erstreckenden Schieberschiene (19), zu deren Querverschiebung ein doppelt wirkender, in Längsrichtung des Futtergangs verlaufend angeordneter, hydraulischer Arbeitszylinder (85) vorgesehen ist, der über Kupplungsglieder (87 bis 96) an zwei in Längsrichtung voneinander entfernten Stellen auf die Schieberschiene (19) einwirkt,
**dadurch gekennzeichnet,**
daß der Arbeitszylinder (85) an einem Ende des Futtergangs (3) angeordnet ist und daß seine Kolbenstange (86) über wenigstens zwei bewegungsübersetzende Parallellenker (88, 88') mit der Schieberschiene (19) verbunden ist und die Schieberschiene (19) jeweils aus ihrer in der Mitte des Futtergangs (3) liegenden Ruhestellung durch entsprechende Umschaltung einer Steuereinheit (67) wechselweise jeweils um die Hälfte ihrer maximalen Bewegungstrecke (S) auf eines von zwei an den beiden Längsseiten des Futtergangs (3) angeordneten Freßgittern (4 oder 5) zu bewegbar ist.

3. Vorrichtung nach Anspruch 1, dadurch gekennzeichnet, daß die Arbeitszylinder (20, 21) zumindest annähernd in Höhe der Schieberschiene (19) im wesentlichen horizontal verlaufend angeordnet sind.

4. Vorrichtung nach einem der Ansprüche 1 oder 3, dadurch gekennzeichnet, daß der oder die Arbeitszylinder (20, 21) und ihre Kolbenstangen (22, 23) in graben- oder rillenartigen Vertiefungen (51) des Stallbodens (13) versenkt angeordnet sind.

5. Vorrichtung nach Anspruch 4, dadurch gekennzeichnet, daß die Arbeitszylinder (20, 21) jeweils um eine horizontale, parallel zur Schieberschiene (19) verlaufende Lagerachse (41) eines im Bereich des Freßgitters (5) angeordneten Schwenklagers (37) schwenkbar gelagert sind.

6. Vorrichtung nach Anspruch 4, dadurch gekennzeichnet, daß in der graben- oder rillenartigen Vertiefung (51) des Futtergangbodens (14) ein mit dem schieberseitigen Ende der Kolbenstange (22, 23) verbundener Schmutzräumer (61) angeordnet ist.

7. Vorrichtung nach Anspruch 1 oder 2, dadurch gekennzeichnet, daß zur zeitabhängigen Steuerung des oder der hydraulischen Arbeitszylinder (20, 21, 85) eine elektronische Steuereinheit (67) mit einem Mikroprozessor vorgesehen ist.

8. Vorrichtung nach Anspruch 7, dadurch gekennzeichnet, daß zur gleichmäßigen hydraulischen Beaufschlagung zweier gleichzeitig arbeitender Arbeitszylinder (20, 21) eine elektromotorisch angetriebene hydraulische Tandempumpe (68) vorgesehen ist, deren Druckleitungen (70, 71) jeweils separat mittels eines ersten 4/3-Wegeventils (65) wahlweise auf eine der beiden Druckkammern (75, 76) des ersten Arbeitszylinders (20) bzw. mittels eines zweiten 4/3-Wegeventils (66) wahlweise auf die beiden Druckkammern (75, 76) des zweiten Arbeitszylinders (21) schaltbar sind, wobei die beiden Arbeitszylinder (20, 21) jeweils mit einem an die Steuereinheit (67) angeschlossenen Weggeber (80, 81) ausgerüstet sind.

9. Vorrichtung nach Anspruch 7 oder 8, dadurch gekennzeichnet, daß die Steuereinheit (67) mit einem einstellbaren Zeitintervallschalter versehen ist, der durch entsprechende Ansteuerungen der beiden 4/3-Wegeventile (65, 66) Arbeitsbewegungen der Schieberschiene (19, 19/1, 19/2) im Rhythmus der jeweils eingestellten Zeitintervalle bewirkt.

10. Vorrichtung nach Anspruch 2 oder 7, dadurch gekennzeichnet, daß in einer unterhalb der Schieberschiene(n) (19, 19/1, 19/2) liegenden Horizontalebene und zumindest annähernd in der Mitte ihres Bewegungsbereichs in einem Längsabstand (a) voneinander wenigstens zwei Parallellenker (88, 88') jeweils um vertikale Schwenkachsen (90) schwenkbar gelagert sind, von denen jeweils ein erster Lenkerarm (91) gelenkig mit der Schieberschiene (19, 19/1, 19/2)) und ein zweiter Lenkerarm (92), der zum ersten zumindest annähernd rechtwinklig verläuft, gelenkig durch eine Zugstange (96) mit dem zweiten Lenkerarm (92) des jeweils benachbarten Parallellenkers (88') und mit der Kolbenstange (86) eines sich in Längsrichtung der Schieberschiene (19, 19/1, 19/2) erstreckenden Arbeitszylinders (85) verbunden ist.

11. Vorrichtung nach Anspruch 10, dadurch gekennzeichnet, daß der mit der Schieberschiene (19, 19/1, 19/2) verbundene erste Lenkerarm (91) eine etwa dem halben Verschiebeweg (s) der Schieberschiene (19, 19/1, 19/2) entsprechende Länge aufweist und in der mittleren Ausgangs- bzw. Ruhelage der Schieberschiene (19, 19/1, 19/2) parallel zu dieser verläuft, während der zweite Lenkerarm (92) höchstens halb so lang ist wie der erste Lenkerarm (91).

12. Vorrichtung nach Anspruch 10 oder 11, dadurch gekennzeichnet, daß die Parallellenker (88, 88') jeweils dritte sich in bezug auf ihre Schwenklagerachsen (90) den zweiten Lenkerarmen (92) diametral gegenüberliegende Lenkerarme (93) aufweist, die jeweils durch Zugstangen (95) gelenkig miteinander verbunden sind.

13. Vorrichtung nach einem der Ansprüche 2, oder 10 bis 12, dadurch gekennzeichnet, daß die Parallellenker (88, 88') und die Zugstangen (95, 96) durch eine oder mehrere befahrbare Abdeckplatten (105) schützend abgedeckt sind.

14. Vorrichtung nach Anspruch 13, dadurch gekennzeichnet, daß die Parallellenker (88, 88') jeweils mittels vertikaler Lagerzapfen (107) an der Unterseite einer Abdeckplatte (105) gelagert sind und durch Kupplungszapfen (108) mit der auf der Oberseite der Abdeckplatte (105) aufliegenden Schieberschiene (19, 19/1, 19/2) gelenkig in Verbindung stehen, wobei die Kupplungszapfen (108) jeweils bogenförmige Schlitzöffnungen (109) der Abdeckplatte (105) durchragen.

## Claims

1. Feed conveying device for conveying cattle feed, in particular feed blocks (17), to at least one feed grating (4, 5) arranged on the longitudinal side of a feed channel (3) of a cowshed for several animals, by means of at least one slide rail (19) extending in the longitudinal direction of the feed channel (3), for the transverse displacement of which two dual-action hydraulic operating cylinders (20, 21) are provided, which are arranged with their respective shaft members running transversely to the longitudinal direction of the feed channel (3) and which act on the slide rail (19) at two locations located at a distance from one another in longitudinal direction, characterised in that the operating cylinders (20, 21) are respectively arranged outside the feed channel (3) in the region of partition gratings (8, 9) of adjacent running fields (7), whereby their piston rods (22, 23) are connected directly to the slide rail (19) and, by appropriate switchover of a control unit (67), the slide rail (19) may be moved respectively from its initial position located in the centre of the feed channel (3) alternately towards one respective feed grating of two (4, 5) arranged on the two longitudinal sides of the feed channel (3).

2. Feed conveying device for conveying cattle feed, in particular feed blocks (17), to at least one feed grating (4, 5) arranged on the longitudinal side of a feed channel (3) of a cowshed for several animals, by means of at least one slide rail (19) extending in the longitudinal direction of the feed channel (3), for the transverse displacement of which a dual-action hydraulic operating cylinder (85) is provided, which is arranged to run in the longitudinal direction of the feed channel and which via coupling members (87 to 96) acts on the slide rail (19) at two locations located at a distance from one another in longitudinal direction,characterised in that the operating cylinder (85) is arranged at one end of the feed channel (3) and that its piston rod (86) is connected to the slide rail (19) via at least two parallel guide members (88,88') transferring motion and, by appropriate switchover of a control unit (67), the slide rail (19) may be moved respectively by half its maximum movement path (S) respectively from its resting position located in the centre of the feed channel (3) alternately towards one feed grating of two (4 or 5) arranged on the two longitudinal sides of the feed channel (3).

3. Device according to Claim 1, characterised in that the operating cylinders (20, 21) are arranged to run essentially horizontally, at least approximately at the height of the slide rail (19).

4. Device according to one of Claims 1 or 3, characterised in that the operating cylinder or cylinders (20, 21) and their piston rods (22, 23) are arranged sunken in trough- or groove-like depressions (51) in the cowshed floor (13).

5. Device according to Claim 4, characterised in that the operating cylinders (20, 21) are disposed to pivot respectively around a horizontal bearing axis (41) running parallel to the slide rail (19) of a pivot bearing (37) arranged in the region of the feed grating (5).

6. Device according to Claim 4, characterised in that a dirt removal means (61) connected to the end of the piston rod (22, 23) on the slider side is arranged in the trough- or groove-like depression (51) of the food channel floor (14).

7. Device according to Claim 1 or 2, characterised in that an electronic control unit (67) with a microprocessor is provided for time-dependent control of the hydraulic operating cylinder or cylinders (20, 21, 85).

8. Device according to Claim 7, characterised in that for the uniform hydraulic power feed of two simultaneously operating cylinders (20, 21), a hydraulic tandem pump (68) driven by electric motor is provided, the pressure lines (70, 71) of which may be respectively switched separately by means of a first 4/3-way valve (65) selectively to one of the two pressure chambers (75, 76) of the first operating cylinder (20) or by means of a second 4/3-way valve (66) selectively to both pressure chambers (75, 76) of the second operating cylinder (21), whereby the two operating cylinders (20, 21) are respectively equipped with a path indicator (80, 81) connected to the control unit (67).

9. Device according to Claim 7 or 8, characterised in that the control unit (67) is provided with an adjustable time interval switch, which by appropriate actuations of the two 4/3-way valves (65, 66) causes operating movements of the slide rail (19, 19/1, 19/2) in synchronisation with the respectively adjusted time interval .

10. Device according to Claim 2 or 7, characterised in that at least two parallel guide members (88, 88') are disposed at a longitudinal distance (a) from one another in a horizontal plane located below the slide rail(s) (19, 19/1, 19/2) and at least approximately in the centre of their range of movement to respectively pivot around vertical pivot axes (90), of which a first respective guide arm (91) is articulated to the slide rail (19, 19/1, 19/2), and a second guide arm (92), which runs at least approximately at right angles to the first, is articulated via a drawbar (96) to the second guide arm (92) of the respectively adjacent parallel guide member (88') and to the piston rod (86) of an operating cylinder (85) extending in the longitudinal direction of the slide rail (19, 19/1, 19/2).

11. Device according to Claim 10, characterised in that the first guide arm (91) connected to the slide rail (19, 19/1, 19/2) has a length corresponding approximately to half the displacement path (s) of the slide rail (19, 19/1, 19/2) and in the central initial or resting position of the slide rail (19, 19/1, 19/2) runs parallel to this, while the second guide arm (92) is at most half the length of the first guide arm (91).

12. Device according to Claim 10 or 11, characterised in that the parallel guide members (88, 88') respectively have third guide arms (93), which are diametrically opposed to the second guide arms (92) with respect to their pivot bearing axes (90) and which are respectively articulated to one another via drawbars (95).

13. Device according to one of Claims 2, or 10 to 12, characterised in that the parallel guide members (88, 88') and the drawbars (95, 96) are protectively covered by one or more movable covering plates (105).

14. Device according to Claim 13, characterised in that the parallel guide members (88, 88') are disposed on the underside of a covering plate (105) respectively by means of vertical bearing journals (107) and are articulated to the slide rail (19, 19/1, 19/2) lying on the upper side of the covering plate (105) via coupling journals (108), whereby the coupling journals (108) respectively protrude through arc-shaped slots (109) in the covering plate (105).

## Revendications

1. Dispositif à pousser du fourrage, en particulier des blocs de fourrage (17), vers au moins un cornadis (4, 5) pour plusieurs animaux placé sur le côté longitudinal d'un couloir d'affouragement (3) d'une étable, au moyen d'au moins une barre pousseuse (19) s' étendant dans la direction longitudinale du couloir d'affouragement (3) et pour le déplacement transversal de laquelle sont prévus deux vérins hydrauliques à double effet (20, 21) dont les axes sont perpendiculaires à la direction longitudinale du couloir d'affouragement (3) et qui agissent sur la barre pousseuse (19) à deux endroits distants l'un de l'autre dans la direction longitudinale,
caractérisé par le fait
que les vérins (20, 21) sont placés à l'extérieur du couloir d'affouragement (3) chacun dans la zone d'une grille séparatrice (8, 9) d'aires de circulation voisines (7), leurs tiges de piston (22, 23) étant jointes directement à la barre pousseuse (19) et celle-ci pouvant, de sa position initiale située au milieu du couloir d'affouragement (3), être, par commutation appropriée d'un appareil de commande (67), mue alternativement vers un de deux cornadis (4, 5) placés sur les deux côtés longitudinaux du couloir d'affouragement (3).

2. Dispositif à pousser du fourrage, en particulier des blocs de fourrage (17), vers au moins un cornadis (4, 5) pour plusieurs animaux placé sur le côté longitudinal d'un couloir d'affouragement (3) d'une étable, au moyen d'au moins une barre pousseuse (19) s'étendant dans la direction longitudinale du couloir d'affouragement (3) et pour le déplacement transversal de laquelle est prévu un vérin hydraulique à double effet (85) qui est orienté dans la direction longitudinale du couloir d'affouragement (3) et agit par l'intermédiaire d'éléments d'accouplement (87 à 96), à deux endroits distants l'un de l'autre dans la direction longitudinale, sur la barre pousseuse (19),
caractérisé par le fait
que le vérin (85) est placé à une extrémité du couloir d'affouragement (3) et que sa tige de piston (86) est reliée à la barre pousseuse (19) par au moins deux guidons (88, 88') qui multiplient le mouvement, et la barre pousseuse (19) peut, à partir de sa position de repos située au milieu du couloir d'affouragement (3), par commutation appropriée d'un appareil de commande (67), être mue alternativement de la moitié de sa course maximale (S) vers un de deux cornadis (4, 5) placés sur les deux côtés longitudinaux du couloir d'affouragement (3).

3. Dispositif selon la revendication 1, caractérisé par le fait que les vérins (20, 21) sont placés sensiblement horizontalement au moins approximativement à la hauteur de la barre pousseuse (19).

4. Dispositif selon l'une des revendications 1 et 3, caractérisé par le fait que le ou chaque vérin (20, 21) et sa tige de piston (22, 23) sont enfoncés dans un creux du genre tranchée ou sillon (51) du sol (13) de l'étable.

5. Dispositif selon la revendication 4, caractérisé par le fait que les vérins (20, 21) sont montés basculants chacun autour d'un axe horizontal (41) s'étendant parallèlement au couloir d'affouragement (3) d'un palier (37) placé dans la zone du cornadis (5).

6. Dispositif selon la revendication 4, caractérisé par le fait que dans le creux du genre tranchée ou sillon (51) du sol (14) du couloir d'affouragement est placée une curette (61) qui est jointe à l'extrémité côté poussée de la tige de piston (22, 23).

7. Dispositif selon l'une des revendications 1 et 2, caractérisé par le fait que pour la commande en fonction du temps du ou des vérins hydrauliques (20, 21, 85) est prévu un appareil électronique de commande (67) qui comporte un microprocesseur.

8. Dispositif selon la revendication 7, caractérisé par le fait que pour la mise sous pression hydraulique uniforme de deux vérins (20, 21) fonctionnant simultanément est prévue une pompe hydraulique tandem (68) qui est entraînée par un moteur électrique et dont les conduites de refoulement (70, 71) peuvent être mises en communication séparément, au moyen d'un premier distributeur 4/3 (65), au choix avec une des deux chambres à pression (75, 76) du premier vérin (20) ou, au moyen d'un deuxième distributeur 4/3 (66), au choix avec les deux chambres à pression (75, 76) du deuxième vérin (21), les deux vérins (20, 21) étant équipés chacun d'un capteur de déplacements (80, 81) relié à l'appareil de commande (67).

9. Dispositif selon l'une des revendications 7 et 8, caractérisé par le fait que l'appareil de commande (67) est pourvu d'un commutateur réglable d'intervalles de temps qui, par commande appropriés des deux distributeurs (65, 66), produit des mouvements de travail de la barre pousseuse (19, 19/1, 19/2) au rythme de l'intervalle de temps fixé.

10. Dispositif selon l'une des revendications 2 et 7, caractérisé par le fait que dans un plan horizontal situé au-dessous de la ou des barres pousseuses (19, 19/1, 19/2) et au moins approximativement au milieu de leur champ de mouvement sont montés pivotants, chacun autour d'un axe vertical (90), à une distance longitudinale (a) l'un de l'autre, au moins deux guidons (88, 88') dont un premier bras (91) est joint de manière articulée à la barre pousseuse (19, 19/1, 19/2) et un deuxième bras (92) qui s'étend au moins approximativement perpendiculairement au premier est joint de manière articulée, par un tirant (96), au deuxième bras (92) du guidon voisin (88'), et à la tige de piston (86) d'un vérin (85) s'étendant dans la direction longitudinale de la barre pousseuse (19, 19/1, 19/2).

11. Dispositif selon la revendication 10, caractérisé par le fait que le premier bras (91) joint à la barre pousseuse (19, 19/1, 19/2) a une longueur correspondant à peu près à la moitié de la course (s) de la barre pousseuse (19, 19/1, 19/2) et, lorsque la barre pousseuse (19, 19/1, 19/2) est en position initiale ou de repos médiane, s'étend parallèlement à celle-ci, tandis que le deuxième bras (92) a au plus la moitié de la longueur du premier bras (91).

12. Dispositif selon l'une des revendications 10 et 11, caractérisé par le fait que chaque guidon (88, 88') présente un troisième bras (93) diamétralement opposé au deuxième (92) par rapport à son axe de pivotement (90), et les troisièmes bras (93) sont reliés de manière articulée par des tirants (95).

13. Dispositif selon l'une des revendications 2 et 10 à 12, caractérisé par le fait que les guidons (88, 88') et les tirants (95, 96) sont couverts pour leur protection par une ou plusieurs plaques de couverture praticables (105).

14. Dispositif selon la revendication 13, caractérisé par le fait que chaque guidon (88, 88') est monté au moyen d'un tourillon vertical (107) sur le dessous d'une plaque de couverture (107) et est joint de manière articulée par un axe d'accouplement (108) à la barre pousseuse (19, 19/1, 19/2), qui repose sur le dessus de la plaque de couverture (105), chaque axe d'accouplement (108) passant par une fente arquée (109) de la plaque de couverture (105).
